# EUROPÄISCHE PATENTANMELDUNG

(11) **EP 3 508 825 A1**
(43) Veröffentlichungstag der Anmeldung: **10.07.2019**
(21) Anmeldenummer: 18211466.0
(22) Anmeldetag: 11.12.2018
(51) Int. Cl.: G01F 1/32

(54) **WIRBELDURCHFLUSSMESSER**

(30) Priorität: 09.01.2018 DE 102018100316
(71) Anmelder: Gemü Gebr. Müller Apparatebau GmbH & Co. Kommanditgesellschaft, 74653 Ingelfingen (DE)
(72) Erfinder: Hasenfuß-Rüdele, Tobias, 74653 Ingelfingen (DE)
(74) Vertreter: DREISS Patentanwälte PartG mbB

(57) **Zusammenfassung**

Es wird ein Wirbeldurchflussmesser (2) zur Ermittlung eines Stromes eines Prozessfluids bereitgestellt. Der Wirbeldurchflussmesser (2) umfasst: Einen Rohrkörper (4), welcher einen Fluidkanal für das Prozessfluid freigibt, wobei der Rohrkörper (4) eine erste Öffnung und einen um die erste Öffnung angeordneten ersten Befestigungsabschnitt umfasst, und wobei der Rohrkörper (4) eine in Flussrichtung des Prozessfluids nach der ersten Öffnung angeordnete zweite Öffnung und einen um die zweite Öffnung angeordneten zweiten Befestigungsabschnitt umfasst; einen zumindest abschnittsweise in den Fluidkanal hineinragenden Störkörper (6), wobei der Störkörper (6) durch die erste Öffnung in den Fluidkanal einbringbar ist, und wobei der Störkörper (6) an dem ersten Befestigungsabschnitt lösbar befestigbar ist; und eine zumindest abschnittsweise in den Fluidkanal hineinragenden Sensoreinheit (8) zur Ermittlung des Stromes des Prozessfluids, wobei die Sensoreinheit (8) durch die zweite Öffnung in den Fluidkanal einbringbar ist, und wobei die Sensoreinheit (8) an dem zweiten Befestigungsabschnitt lösbar befestigbar ist.

## Beschreibung

Die Erfindung betrifft einen Wirbeldurchflussmesser zur Ermittlung eines Stromes eines Prozessfluids.

Durchflussmesser, welche nach dem Wirbeldurchflussprinzip bzw. Vortex-Prinzip arbeiten, sind allgemein bekannt. Beispielhaft wird auf die DE 10249543 verwiesen.

Die Probleme des Standes der Technik werden durch einen Wirbeldurchflussmesser nach dem Anspruch 1 gelöst. Vorteilhafte Ausführungsformen sind in den Unteransprüchen angegeben und finden sich ferner in der nachfolgenden Beschreibung von Ausführungsbeispielen.

Es wird ein Wirbeldurchflussmesser zur Ermittlung eines Stromes eines Prozessfluids bereitgestellt. Der Wirbeldurchflussmesser umfasst: Einen Rohrkörper, welcher einen Fluidkanal für das Prozessfluid freigibt, wobei der Rohrkörper eine erste Öffnung und einen um die erste Öffnung angeordneten ersten Befestigungsabschnitt umfasst, und wobei der Rohrkörper eine in Flussrichtung des Prozessfluids nach der ersten Öffnung angeordnete zweite Öffnung und einen um die zweite Öffnung angeordneten zweiten Befestigungsabschnitt umfasst; einen zumindest abschnittsweise in den Fluidkanal hineinragenden Störkörper, wobei der Störkörper durch die erste Öffnung in den Fluidkanal einbringbar ist, und wobei der Störkörper an dem ersten Befestigungsabschnitt lösbar befestigbar ist; und eine zumindest abschnittsweise in den Fluidkanal hineinragenden Sensoreinheit zur Ermittlung des Stromes des Prozessfluids, wobei die Sensoreinheit durch die zweite Öffnung in den Fluidkanal einbringbar ist, und wobei die Sensoreinheit an dem zweiten Befestigungsabschnitt lösbar befestigbar ist.

Vorteilhaft wird ein modularer Wirbeldurchflussmesser bereitgestellt, bei der sowohl Störkörper als auch Sensoreinheit, welche zu einer Messung nach dem Vortex-Messprinzip nötig sind, austauschbar sind. Die Austauschbarkeit von Störkörper und Sensoreinheit verbessern die Wartbarkeit und erhöhen die Verfügbarkeit der gesamten Anlage, da der Rohrkörper selbst nicht zwangsweise ausgetauscht werden muss.

Darüber hinaus wird die Fertigung des Rohrkörpers, des Störkörpers und der Sensoreinheit voneinander entkoppelt. Dies bietet insbesondere bei dem Störkörper Vorteile, da dieser nunmehr genauer gefertigt werden kann als bei einer Fertigung gemeinsam mit dem Rohrkörper. Eine präzisere Fertigung des Störkörpers ermöglicht eine präzisere Messung der durch den Störkörper verursachten Verwirbelungen des Prozessfluids. Folglich wird ein kostengünstiger und modularer Wirbeldurchflussmesser mit erhöhter Messgenauigkeit bereitgestellt. Die Sensoreinheit kann vorteilhaft unabhängig vom Rohrkörper gefertigt, getestet und kalibriert werden. Ein Austausch des Störkörpers kann insbesondere bei abrasiven Prozessmedien vorteilhaft sein, um die Messgenauigkeit aufrechtzuerhalten.

Eine vorteilhafte Ausführungsform zeichnet sich dadurch aus, dass die erste und die zweite Öffnung auf sich gegenüberliegenden Seiten des Rohrkörpers angeordnet sind.

Vorteilhaft wird dadurch die Zugänglichkeit zum Austausch des Störkörpers und der Sensoreinheit sichergestellt. Darüber hinaus wird die Ausgestaltung der Sensoreinheit von der Ausgestaltung des Störkörpers außerhalb des Rohres konstruktiv voneinander entkoppelt. Es ergeben sich somit konstruktive Freiheitsgrade.

Eine vorteilhafte Ausführungsform zeichnet sich dadurch aus, dass der Rohrkörper eine Außenangriffskontur zum Angriff eines Werkzeugs umfasst, wobei die Außenangriffskontur zwischen einer Einflussöffnung des Fluidkanals und der ersten Öffnung zur Aufnahme des Störkörpers angeordnet ist.
Vorteilhaft kann durch die so angeordnete Angriffskontur zum einen ein Vorlaufvolumen innerhalb des Fluidkanals bereitgestellt werden und zum anderen kann die Längserstreckung des Wirbeldurchflussmessers reduziert werden.

Eine vorteilhafte Ausführungsform zeichnet sich dadurch aus, dass der Rohrkörper eine erste Kodierung aufweist, um den Störkörper derart im Rohrkörper aufzunehmen, dass eine Staufläche des Störkörpers entgegen der Flussrichtung des Prozessfluids ausgerichtet ist. Vorteilhaft wird so die Ausrichtung des Störkörpers sichergestellt.

Eine vorteilhafte Ausführungsform zeichnet sich dadurch aus, dass der Rohrkörper eine zweite Kodierung aufweist, um die Sensoreinheit gemäß einer vorbestimmten Position im Rohrkörper aufzunehmen. Vorteilhaft wird so die Ausrichtung der Sensoreinheit sichergestellt.

Eine vorteilhafte Ausführungsform zeichnet sich dadurch aus, dass der Rohrkörper aus Polyvinylchlorid (PVC), Polypropylen (PP), Polyvinyliden fluorid (PVDF), ein Perfluoroalkoxy-Polymer (PFA) oder Edelstahl gefertigt ist.

Eine vorteilhafte Ausführungsform zeichnet sich dadurch aus, dass der Störkörper aus Polytetrafluoroethylen (PTFE) oder PFA gefertigt ist. Vorteilhaft wird hierdurch die Beständigkeit des Störkörpers gegenüber abrasiven Prozessmedien verbessert.

Eine vorteilhafte Ausführungsform zeichnet sich dadurch aus, dass der Rohrkörper und der Störkörper aus dem gleichen Material, insbesondere aus PVC, PP, PVDF, PFA oder Edelstahl gefertigt sind. Vorteilhaft können hierdurch gleiche Annahmen betreffend die Materialbeständigkeit angenommen werden, was unter anderem die Abnahme der gesamten Anlage vereinfacht.

Weitere Merkmale und Vorteile sind in der nachfolgenden Beschreibung der Zeichnung enthalten. In der Zeichnung zeigen:
Figur 1 in schematischer perspektivischer Ansicht einen Wirbeldurchflussmesser;
Figur 2 in schematischer Schnittansicht den Wirbeldurchflussmesser;
Figur 3 in schematischer perspektivischer Ansicht einen Störkörper; und
Figur 4 in schematischer perspektivischer Ansicht eine Sensoreinheit.

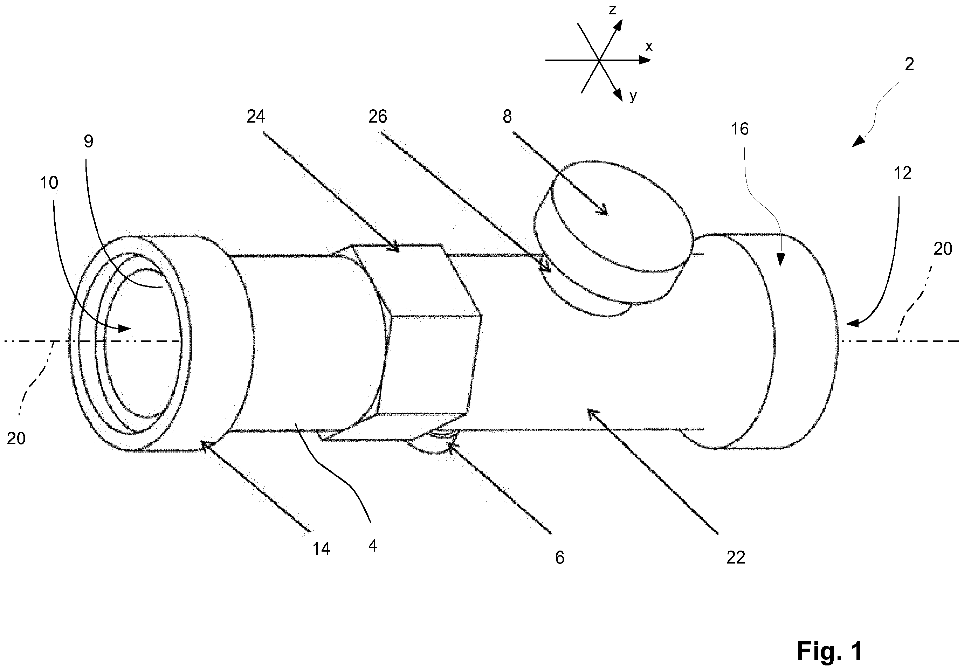

Figur 1 zeigt in schematischer perspektivischer Ansicht einen Wirbeldurchflussmesser 2. Der Wirbeldurchflussmesser 2 umfasst einen Rohrkörper 4, einen Störkörper 6 und eine Sensoreinheit 8. Entlang seiner Längsachse 20 gibt der Rohrkörper 4 einen Fluidkanal 9 frei, welcher eine Eingangsöffnung 10 mit einer Ausgangsöffnung 12 fluidführend verbindet. Die Eingangsöffnung 10 ist von einem ersten Verbindungsabschnitt 14 umgeben, wobei der erste Verbindungsabschnitt 14 beispielsweise ein Außengewinde umfasst. Die Ausgangsöffnung 12 ist von einem zweiten Verbindungsabschnitt 16 umgeben, wobei der zweite Verbindungsabschnitt 16 beispielsweise ein Außengewinde umfasst.
Der Störkörper 6 ist durch eine erste Öffnung in einer Wandung 22 des Rohrkörpers 4 in den Fluidkanal 9 eingebracht. Die Sensoreinheit 8 ist durch eine zweite Öffnung in der Wandung 22 in den Fluidkanal 9 eingebracht. Entlang der Längsachse 20 befindet sich der Störkörper 6 zwischen der Sensoreinheit 8 und einer Außenangriffskontur 24 zum Angriff eines Werkzeugs.

Die Sensoreinheit 8 umfasst vorliegend eine verliersicher angeordnete Überwurfmutter 26, welche mittels eines Innengewindes in ein Außengewinde eines zweiten Befestigungsabschnitts des Rohrkörpers 4 eingreift und so die Sensoreinheit 8 lösbar an dem Rohrkörper 4 befestigt. In analoger Form ist auch der Störkörper 6 im Bereich der zugehörigen ersten Öffnung mit einer Überwurfmutter an einem ersten Befestigungsabschnitt des Rohrkörpers 4 lösbar befestigbar.

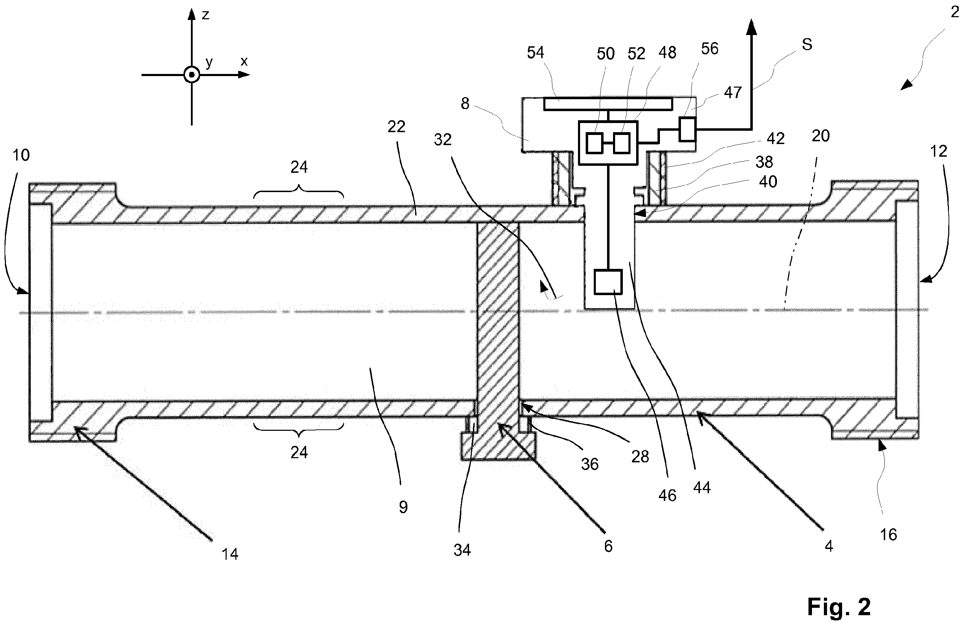

Figur 2 zeigt in schematischer Schnittansicht den Wirbeldurchflussmesser 2. Die erste Öffnung 28 für den Störkörper 6 ist eine Durchgangsöffnung, welche sich lotrecht zur Längsachse 20 durch die Wandung 22 erstreckt. Die erste Öffnung 28 umfasst beispielsweise eine Innenkontur, welche den Störkörper 6 nur derart aufnimmt, sodass dessen Staufläche 30 entgegen einer Flussrichtung x des Prozessfluids zeigt. Die erste Öffnung 28 umfasst somit eine Kodierung. Die Kodierung kann allerdings alternativ oder zusätzlich in eine Innenwandung des Fluidkanals 9 eingebracht sein, wobei sich die Kodierung auf der gegenüberliegenden Seite der ersten Öffnung 28 befindet. Radial nach außen ist die erste Öffnung 28 von dem ersten Befestigungsabschnitt 34 umgeben. Der erste Befestigungsabschnitt 34 umfasst beispielsweise einen Hohlzylinder mit einem Außengewinde. In das Außengewinde des ersten Befestigungsabschnitts 34 greift eine Überwurfmutter 36 mit einem Innengewinde ein, wobei die Überwurfmutter 36 verlierersicher an dem Störkörper 6 angeordnet ist. Folglich wird eine lösbare Verbindung des Rohrkörpers 4 mit dem Störkörper 6 bereitgestellt.

Der zweite Befestigungsabschnitt 38 ragt radial vom Rohrkörper 4 ab und umgibt die zweite Öffnung 40, durch welche die Sensoreinheit 8 abschnittsweise in den Fluidkanal 9 eingebracht ist. Analog zur Öffnung 28 weist die Öffnung 40 eine Kodierung zur Aufnahme der Sensoreinheit 8 auf. Der zweite Befestigungsabschnitt 38 umfasst ein Außengewinde, in welches ein Innengewinde einer verliersicher an der Sensoreinheit 8 angeordneten Überwurfmutter 42 eingreift. Folglich wird eine lösbare Verbindung des Rohrkörpers 4 mit der Sensoreinheit 8 bereitgestellt.

Die von den Kanten des Störkörpers 6 abreißenden Wirbel 32 werden von der Sensoreinheit 8 erfasst. Die Sensoreinheit 8 umfasst einen Fluidabschnitt 44 zur Anordnung in den Fluidkanal 9 und einen Außenabschnitt 47, welcher von außen zugänglich ist. Der Fluidabschnitt 44 umfasst einen Sensor 46 welche die Verwirbelungen 32 in geeigneter Form wie beispielsweise durch Druckschwankungen misst. Der Sensor 46 ist mit einer Auswerteeinheit 48 elektrisch verbunden, wobei die Auswerteeinheit 48 einen Mikroprozessor 50 und einen Speicher 52 aufweist. Die Sensoreinheit 8 umfasst des Weiteren eine Anzeigeeinheit 54 zur Anzeige eines mittels des Sensors 46 ermittelten Stromes S des Prozessfluids und eine Schnittstelle 56 zur Ausgabe des ermittelten Stromes S des Prozessfluids. Der ermittelte Strom S des Prozessfluids umfasst beispielsweise einen Massestrom oder einen Volumenstrom des Prozessfluids, welches den Fluidkanal 9 durchfließt.

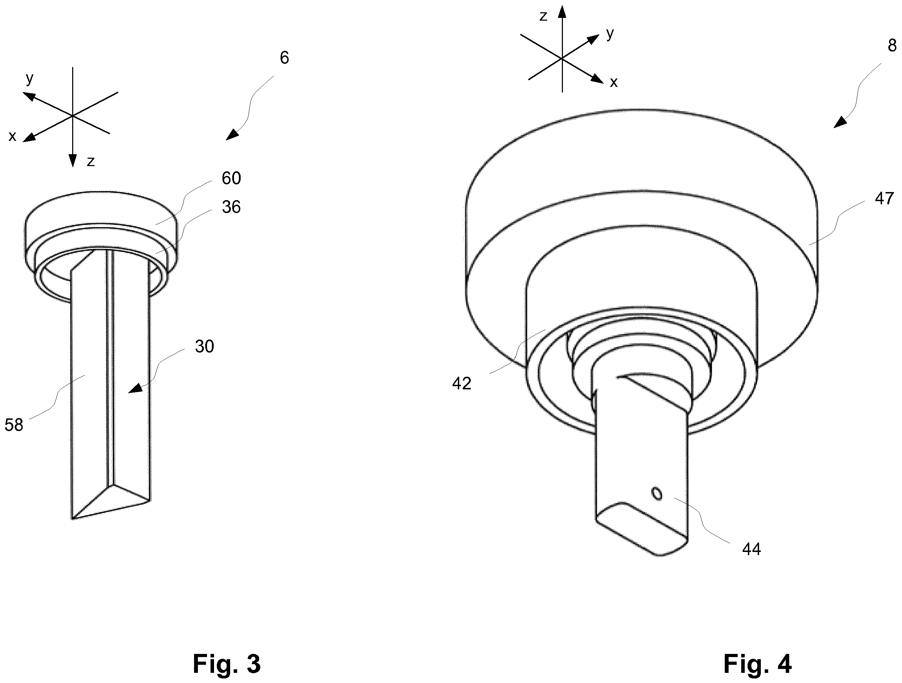

Figur 3 zeigt in schematischer perspektivischer Ansicht den Störkörper 6. Ein stegförmiger Abschnitt 58 zur Einbringung in den Fluidkanal stellt die Staufläche 30 bereit. Der stegförmige Abschnitt 58 ist an einem Außenabschnitt 60 befestigt. Die schematisch dargestellte Überwurfmutter 36 ist verlierersicher aber drehbar an dem Außenabschnitt 60 angeordnet.

Figur 4 zeigt in schematischer perspektivischer Ansicht die Sensoreinheit 8. Die schematisch dargestellte Überwurfmutter 42 ist an dem Außenabschnitt 47 verlierersicher aber drehbar angeordnet.

## Patentansprüche

1. Ein Wirbeldurchflussmesser (2) zur Ermittlung eines Stromes eines Prozessfluids, der Wirbeldurchflussmesser (2) umfassend:
- einen Rohrkörper (4), welcher einen Fluidkanal für das Prozessfluid freigibt, wobei der Rohrkörper (4) eine erste Öffnung und einen um die erste Öffnung angeordneten ersten Befestigungsabschnitt umfasst, und wobei der Rohrkörper (4) eine in Flussrichtung des Prozessfluids nach der ersten Öffnung angeordnete zweite Öffnung und einen um die zweite Öffnung angeordneten zweiten Befestigungsabschnitt umfasst;
- einen zumindest abschnittsweise in den Fluidkanal hineinragenden Störkörper (6), wobei der Störkörper (6) durch die erste Öffnung in den Fluidkanal einbringbar ist, und wobei der Störkörper (6) an dem ersten Befestigungsabschnitt lösbar befestigbar ist; und
- eine zumindest abschnittsweise in den Fluidkanal hineinragenden Sensoreinheit (8) zur Ermittlung des Stromes des Prozessfluids, wobei die Sensoreinheit (8) durch die zweite Öffnung in den Fluidkanal einbringbar ist, und wobei die Sensoreinheit (8) an dem zweiten Befestigungsabschnitt lösbar befestigbar ist.

2. Der Wirbeldurchflussmesser nach dem Anspruch 1, wobei die erste und die zweite Öffnung auf sich gegenüberliegenden Seiten des Rohrkörpers (4) angeordnet sind.

3. Der Wirbeldurchflussmesser nach dem Anspruch 1 oder 2, wobei der Rohrkörper (4) eine Außenangriffskontur zum Angriff eines Werkzeugs umfasst, wobei die Außenangriffskontur zwischen einer Einflussöffnung des Fluidkanals und der ersten Öffnung zur Aufnahme des Störkörpers (6) angeordnet ist.

4. Der Wirbeldurchflussmesser nach einem der vorstehenden Ansprüche, wobei der Rohrkörper (4) eine erste Kodierung aufweist, um den Störkörper (6) derart im Rohrkörper (4) aufzunehmen, dass eine Staufläche des Störkörpers (6) entgegen der Flussrichtung des Prozessfluids ausgerichtet ist.

5. Der Wirbeldurchflussmesser nach einem der vorstehenden Ansprüche, wobei der Rohrkörper (4) eine zweite Kodierung aufweist, um die Sensoreinheit (8) gemäß einer vorbestimmten Position im Rohrkörper (4) aufzunehmen.

6. Der Wirbeldurchflussmesser nach einem der vorstehenden Ansprüche, wobei der Rohrkörper (4) aus PVC, PP, PVDF, PFA oder Edelstahl gefertigt ist.

7. Der Wirbeldurchflussmesser nach einem der vorstehenden Ansprüche, wobei der Störkörper (6) aus PTFE oder PFA gefertigt ist.

8. Der Wirbeldurchflussmesser nach einem der Ansprüche 1 bis 5, wobei der Rohrkörper (4) und der Störkörper (6) aus dem gleichen Material, insbesondere aus PVC, PP, PVDF, PFA oder Edelstahl gefertigt sind.
